# FASCICULE DE BREVET EUROPEEN

(11) **EP 3 779 612 B1**
(45) Date de publication et mention de la délivrance du brevet: **27.05.2026**
(21) Numéro de dépôt: 19192105.5
(22) Date de dépôt: 16.08.2019
(51) Int. Cl.: G04G 9/00, G04G 21/04

(54) **PROCÉDÉ ET SYSTÈME DE DIFFUSION D'UN MESSAGE À UN PORTEUR D'UNE MONTRE**
VERFAHREN UND SYSTEM ZUR VERBREITUNG EINER NACHRICHT AN EINEN TRÄGER EINER ARMBANDUHR
METHOD FOR BROADCASTING A MESSAGE TO THE WEARER OF A WATCH

(43) Date de publication de la demande: 17.02.2021
(73) Titulaire: The Swatch Group Research and Development Ltd, 2074 Marin (CH)
(72) Inventeur: BAZIN, Jean-Luc, 2512 Tüscherz-Alfermée (CH); BRAVO, Paulo, 2074 Marin-Epagnier (CH)
(74) Mandataire: ICB SA

(56) Documents cités:
- WO-A1-95/16939
- US-A1- 2014 036 640
- US-A1- 2016 117 735
- US-A1- 2018 299 292

## Description

### Domaine technique

L'invention concerne un procédé de diffusion d'un message à un porteur d'une montre et un système mettant en œuvre un tel procédé.

L'invention concerne également un système de diffusion d'un message à un porteur d'une montre, ainsi qu'un programme d'ordinateur.

### Arrière-plan technologique

Dans l'état de la technique, différents procédés participent à la transmission d'un message par l'intermédiaire d'une pièce d'horlogerie. On connaît par exemple des procédés consistant à imprimer un tel message sur une partie de la pièce d'horlogerie telle que le bracelet afin que le porteur à qui est destiné le message en prenne connaissance dès lors qu'il est en possession de cette dernière. On connaît également, d'autres procédés visant à transmettre ce message par l'intermédiaire d'un écran compris dans une partie constitutive de la pièce d'horlogerie par exemple le cadran, de tels procédés mettant en œuvre pour la diffusion de ce message des technologies de télécommunication entre un serveur distant et ladite pièce pourvue de cet écran. US 2014/036640 A1 divulgue les caractéristiques du préambule de la revendication 1. Toutefois de tels procédés présentent un inconvénient majeur lié à la sécurité et la confidentialité dans la transmission d'un tel message. En effet, d'autres individus que le porteur de la pièce d'horlogerie, peuvent également prendre connaissance de ce message dès lors qu'ils sont en possession de cette pièce d'horlogerie.

On comprend qu'il existe alors un besoin de trouver une solution alternative, notamment qui ne présente pas les inconvénients de l'art antérieur.

### Résumé de l'invention

Dans ce dessein, l'invention concerne un procédé de diffusion d'un message à un porteur d'une montre selon la revendication 1.

Dans d'autres modes de réalisation :
- l'étape de numérisation comprend une sous-étape d'acquisition de la représentation graphique prévoyant l'agencement du dispositif électronique à proximité immédiate de la montre de manière à ce qu'un module de capture du dispositif électronique est disposé en regard de cette représentation graphique située dans le guichet du cadran ;
- l'étape d'émission comprend une sous-étape de décodage d'un code matriciel compris dans la représentation graphique en vue d'obtenir des séquences d'informations binaires comportant des données relatives à un emplacement d'un fichier numérique comprenant ledit message ;
- l'étape d'émission comprend une sous-étape de génération par le dispositif électronique d'une requête d'obtention d'un fichier numérique comprenant des données de message à partir de séquences d'informations binaires comprenant des données relatives à un emplacement dudit fichier numérique ;
- l'étape d'émission comprend une sous-étape de transmission par le serveur du tiers de confiance au dispositif électronique d'un fichier numérique comprenant des données de message ;
- l'étape d'émission comprend une sous-étape de traitement des données de message comprenant une phase de génération d'un signal de diffusion du message ;
- la sous-étape de traitement comprend une phase de transmission de ce signal de diffusion à l'interface de diffusion du dispositif électronique.

L'invention concerne également un système de diffusion d'un message à un porteur d'une montre comprenant ladite montre et des éléments aptes à communiquer entre eux tels qu'un dispositif électronique et un serveur d'un tiers de confiance fournisseur de messages, ladite montre comprenant un cadran pourvu d'un guichet dans lequel est affichée une représentation graphique relative audit message susceptible d'être diffusé par le dispositif électronique.

L'invention concerne aussi un programme d'ordinateur comprenant des instructions de code de programme pour l'exécution des étapes de ce procédé, lorsque ledit programme d'ordinateur est exécuté par les unités de traitement du dispositif électronique et d'un serveur d'un tiers de confiance fournisseur de messages.

### Brève description des figures

L'invention sera décrite ci-après de manière plus détaillée à l'aide des dessins annexés, donnés à titre d'exemples nullement limitatifs, dans lesquels :
- la figure 1 représente un système de diffusion d'un message à un porteur d'une montre, selon un mode de réalisation de l'invention ;
- la figure 2 représente une montre du système comprenant une représentation graphique comprise dans un guichet de ladite montre selon le mode de réalisation de l'invention ;
- la figure 3 représente un dispositif électronique et la montre du système coopérant ensemble afin de réaliser la diffusion d'un message au porteur de la montre, et
- la figure 4 représente un logigramme relatif à un procédé de diffusion d'un message à un porteur de la montre.

### Description détaillée de l'invention

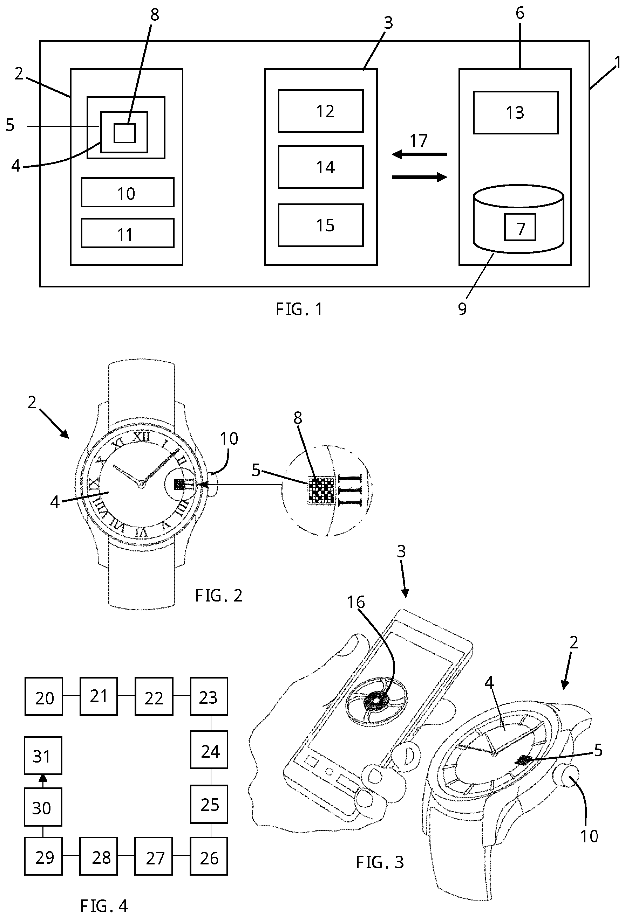

La figure 1 représente un système de diffusion 1 d'un message à un porteur d'une montre 2 par l'intermédiaire d'un dispositif électronique 3 après la capture par ce dernier d'au moins une représentation graphique 8 relative audit message 16, comprise sur/dans un cadran 4 de ladite montre 2 mise en œuvre dans ce système 1.

Ce système 1 comprend :
- la montre 2 ;
- le dispositif électronique 3 ;
- un serveur 6 d'un tiers de confiance fournisseur de messages 16 comportant une base de données 9 pourvue d'une pluralité de fichiers électroniques 7 relatifs à des messages 16 susceptibles d'être diffusés au porteur de la montre 2, et
- une architecture réseau sans fil et/ou filaire reliant le dispositif électronique 3 et le serveur 6 entre eux.

Un tel système 1 permet ainsi au porteur de la montre 2 visible sur les figures 2 et 3, de recevoir un message 16 visuel et/ou sonore diffusé par le dispositif électronique 3, ledit message 16 étant associé la représentation graphique 8 présente sur/dans le cadran 4 la montre 2. Une telle montre 2 comprend un cadran 4 par exemple un cadran 4 d'affichage hybride pouvant alors être pourvu d'une première composante d'affichage analogique et d'une deuxième composante d'affichage numérique et/ou alphanumérique. Cette montre 2 peut aussi comprendre une glace tactile, une couronne et des boutons poussoirs qui servent chacun d'organe de commande 10 de cette montre 2 pour la mise en œuvre de différentes fonctions de cette montre 2. Dans cette montre 2, la représentation graphique 8 est de préférence destinée à être affichée dans une ouverture 5 définie dans le cadran 4 de la montre 2 formant le guichet 5. Plus précisément, cette représentation graphique 8 est comprise sur un disque 11 de cette montre 2 disposé relativement au cadran 4 de manière à positionner notamment sur commande la représentation graphique 8 comprise sur sa surface dans le guichet 5 de ce cadran 4. Ce disque 11 est de préférence un disque 11 rotatif/mobile tel qu'un disque 11 de quantième comprenant sur sa surface en plus de la représentation graphique 8, des symboles relatifs à des informations horométriques différentes ou similaires. Ces informations horométriques peuvent comprendre par exemple un quantième, le numéro de cycle annuel ou encore le nom du mois en cours. On notera que cette surface du disque 11 sur laquelle sont définis la représentation graphique 8 et ces symboles, est située en regard d'une face arrière ou face non visible du cadran 4. En outre, les organes de commande 10 de cette montre 2, sont de préférence en liaison cinématique avec le disque 11 rotatif lorsque la montre 2 comprend un mouvement mécanique ou encore en liaison électronique avec ce disque 11 lorsqu'elle est pourvue d'un mouvement électronique.

Dans le présent mode de réalisation, ce disque 11 rotatif peut être divisé en trente-deux positions consécutives comportant trente-et-une positions représentatives des quantièmes du mois courant et une trente-deuxième position située entre la première et la trente-et-unième position, comprenant la représentation graphique 8.

Cette représentation graphique 8 visible sur la figure 2, comprend un code matriciel. Ce code matriciel peut-être un code-barres à deux ou trois dimensions. Ce code matriciel peut par exemple comprendre un code QR ou encore un code datamatrix. Ce code matriciel comprend des séquences d'informations binaires qui sont codées/chiffrées. Dans la représentation graphique 8 le code matriciel comprend des séquences d'informations binaires comportant des données relatives à un emplacement d'un fichier numérique 7 comprenant des données de message 16. Autrement dit, ces données des séquences d'informations binaires sont dans ce mode de réalisation, relatives à un lien hypertexte permettant de récupérer le fichier numérique 7 du serveur 6. On comprend que de telles données peuvent être dans un autre mode de réalisation, un élément d'identification de ce fichier numérique 7 permettant au serveur 6 à la suite d'une réception d'une requête comprenant cet élément d'identification, de transmettre ce fichier 7 au dispositif électronique 3. Cette requête est bien sûr initialement générée et transmise au serveur 6 par le dispositif électronique 3.

Un tel message 16 compris dans le fichier numérique 7 est donc transmis à ce dispositif électronique 3 par le serveur 6. Un tel serveur 6 comprend donc la base de données 9 comportant des fichiers numériques 7 relatifs aux messages 16 susceptibles d'être diffusés par le dispositif électronique 3, et optionnellement pour chacun de ces fichiers numériques 7, un élément d'identification. Ce serveur 6 comprend aussi une unité de traitement 12 pourvue de ressources matérielles et logicielles en particulier au moins un processeur coopérant avec des éléments de mémoire. Le serveur 6 comprend également une unité de communication pour recevoir et émettre des données à distance via le réseau téléphonique cellulaire, un réseau de données de type IP via le réseau téléphonique ou un réseau de données de type IP via un réseau filaire de type Ethernet.

Dans ce système 1, on comprend que la diffusion de messages 16 par l'intermédiaire du dispositif électronique 3, peut résulter notamment d'un flux de données de contenu et de données d'application Web provenant de ce serveur 6.

Par ailleurs, le dispositif électronique 3 dans ce système 1, peut comprendre par exemple : un ordinateur, un ordiphone, une borne, un smartphone ou encore une tablette. Un tel dispositif électronique 3 peut être mobile et/ou portable et/ou compact. Ce dispositif électronique 3 comporte de manière non limitative et/ou non exhaustive :
- une unité de traitement 13 comportant des ressources matérielles et logicielles en particulier au moins un processeur coopérant avec des éléments de mémoire ;
- une interface de diffusion 14 de messages16 telle qu'un écran ou un module sonore de type haut-parleur ;
- une interface de communication permettant au dispositif électronique 3 d'établir une liaison de communication avec le serveur 6 du tiers de confiance pour la réalisation d'échange de données 17 ;
- une interface de sélection tel qu'un clavier ou encore une interface tactile, et
- un module de capture 15 d'au moins une image comprenant notamment au moins un capteur d'image autrement appelé un capteur d'image matriciel qui peut par exemple comprendre des capteurs de technologie CCD (technologie a transfert de charges) ou encore de technologie dite CMOS.

Dans ce dispositif électronique 3, l'unité de traitement 13 est reliée entre autres à l'interface de diffusion 14, à l'interface de communication, au module de capture 15 et à l'interface de sélection. L'interface de communication de ce dispositif électronique 3 comprend des éléments de communication pour recevoir et émettre des données à distance via le réseau téléphonique cellulaire, un réseau de données de type IP via le réseau téléphonique ou un réseau de données de type IP via un réseau à moyenne portée, par exemple le WIFI ou de petite portée reposant sur une technologie Bluetooth.

Dans le module de capture 15, chaque capteur d'image comprend une matrice de points d'image (ou pixel) photosensibles. Cette matrice de points est également appelée ici « matrice de pixel » et comprend NxM pixels unitaires avec une excellente sensibilité à la lumière. Le module de capture 15 comprend aussi un convertisseur analogique-numérique AN relié à l'unité de traitement 13 du dispositif électronique 3.

En référence à la figure 3, un tel système 1 est apte à mettre en œuvre un procédé de diffusion de ce message 16 au porteur de la montre 2. Ce procédé comprend une étape d'affichage 20 de ladite représentation graphique 8 dans le guichet 5 du cadran 4. Une telle étape 20 comprend une sous-étape de sélection 21 de la représentation graphique 8 à afficher dans ledit guichet 5 prévoyant l'actionnement d'au moins un organe de commande 10 de ladite montre 2. Lors de cette sous-étape 21, l'actionnement dudit au moins un organe 10 provoque/engendre le déplacement du disque 11 rotatif relativement au cadran 4 et en particulier relativement au guichet 5 défini dans ce cadran 4. Ce déplacement du disque 11 rotatif est effectué jusqu'à une position autorisant l'agencement de ladite au moins une représentation graphique 8 dans ou au regard de ce guichet 5. Autrement dit, lorsque le disque 11 rotatif est divisé en trente-deux positions consécutives avec trente-et-une positions représentatives de quantièmes du mois courant et une trente-deuxième position, comprenant la représentation graphique 8, située entre la première et la trente-et-unième position alors le déplacement du disque 11 rotatif est réalisé jusqu'à ce que cette trente-deuxième position soit située en regard du guichet 5. Lorsque cette trente-deuxième position est localisée en regard du guichet 5 alors la représentation graphique 8 comprise sur le disque 11 est visible sur le cadran au travers de ce guichet 5.

Le procédé comprend ensuite une étape de numérisation 22 par le dispositif électronique 3 de la représentation graphique 8 affichée dans le guichet 5. Cette étape 22 comprend une sous-étape d'acquisition 23 de cette représentation graphique 8 prévoyant l'agencement du dispositif électronique 3 à proximité immédiate de la montre 2 de manière à ce que le module de capture 15 soit disposé en regard de cette représentation graphique 8 située dans le guichet 5 du cadran 4. Lors de cette sous-étape 23, la matrice de pixels détecte au moins une image provenant de la représentation graphique 8 et génère alors des signaux analogiques relatifs à cette représentation 8. Le convertisseur analogique-numérique du module de capture 15 convertit alors ensuite ces signaux analogiques provenant de cette matrice de pixels en des signaux numériques qui sont transmis à l'unité de traitement 13 du dispositif électronique 3.

Par la suite, ce procédé comprend une étape d'émission 24 par ledit dispositif électronique 3 du message 16 associé à ladite représentation graphique 8. Pour ce faire, cette étape 24 comprend une sous-étape de décodage 25 du code matriciel compris dans la représentation graphique 8 en vue d'obtenir des séquences d'informations binaires comportant des données relatives à un emplacement distant du fichier numérique 7 comprenant des données de message. Lors de cette sous-étape 25, l'unité de traitement 13 applique un algorithme de décodage audit signaux numériques de sorte à obtenir les séquences d'informations binaires comportant des données relatives à un emplacement de ce fichier numérique 7. Ces séquences d'informations binaires comprennent de préférence dans ce mode de réalisation un lien hypertexte.

Cette étape d'émission 24 comprend ensuite une sous-étape de génération 26 par le dispositif électronique 3 d'une requête d'obtention du fichier numérique 7 comprenant lesdites données de message à partir des séquences d'informations binaires comportant les données relatives à l'emplacement dudit fichier numérique 7. Lors de cette sous-étape 26, cette requête est générée dans ce mode de réalisation notamment à partir du lien hypertexte.

Cette étape d'émission 24 comprend aussi une sous-étape de transmission 27 du fichier numérique 7 par le serveur 6 du tiers de confiance au dispositif électronique 3. A la suite de cette sous-étape 27, l'unité de traitement 13 du dispositif électronique 3 met en œuvre lors de cette étape de d'émission 24, une sous-étape de traitement 28 des données de message comprises dans ledit fichier numérique 7 comportant une phase de génération 29 d'un signal de diffusion du message 16 et une phase de transmission 30 de ce signal de diffusion à l'interface de diffusion 14 du dispositif électronique 3. Cette étape d'émission 24 comprend ensuite une sous-étape de génération 31 du message 16 à partir du signal de diffusion reçu. Ce message 16 ainsi généré comprend alors :
- un flux audio correspondant à un message 16 sonore ;
- un flux lumineux correspondant à un message 16 de type photographique bidimensionnel ou tridimensionnel, ou de type graphique bidimensionnel ou tridimensionnel ;
- un flux lumineux correspondant à un message 16 de type vidéo bidimensionnel ou tridimensionnel, ou
- des flux audio et lumineux simultanés correspondant à un message 16 audio-vidéo.

En complément, on notera que le message 16 peut aussi correspondre à des données confidentielles ou privées propres au porteur et utiles pour accéder à des services personnalisés. Ces données sont par exemple des clés, certificats, codes d'authentification, mots de passe et codes personnels qui permettent de réaliser une connexion sécurisée de la montre à un réseau privé d'une entreprise, une authentification auprès de serveurs sécurisés comme un serveur bancaire, ou une messagerie sécurisée pour l'envoi et la réception de courriels signés et/ou chiffrés.

On remarquera que le procédé peut prévoir l'établissement d'une liaison sécurisée entre le dispositif électronique 3 et le serveur 6 lors des échanges de données 17 effectués entre eux.

L'invention porte aussi sur un programme d'ordinateur comprenant des instructions de code de programme pour l'exécution d'étapes du procédé décrites ci-dessus lorsque ledit programme d'ordinateur est exécuté par les unités de traitement 12, 13 du serveur 6 et du dispositif électronique 3.

## Revendications

1. Procédé de diffusion d'un message (16) à un porteur d'une montre (2) comprenant :
- une étape d'affichage (20) de ladite représentation graphique (8) dans le guichet (5) du cadran (4), l'étape d'affichage (20) comprenant une sous-étape de sélection (21) de la représentation graphique (8) à afficher dans ledit guichet (5) prévoyant l'actionnement d'au moins un organe de commande (10) de ladite montre (2) ; **caractérisé en ce que** le procédé comprend les étapes suivantes:
- une étape de numérisation (22) par un dispositif électronique (3) d'une représentation graphique (8) affichée dans ledit guichet (5) du cadran (4) de ladite montre (2), et
- une étape d'émission (24) par ledit dispositif électronique (3) du message (16) associé à ladite représentation graphique (8) numérisée.

2. Procédé selon la revendication 1, **caractérisé en ce que** l'étape de numérisation (22) comprend une sous-étape d'acquisition (23) de la représentation graphique (8) prévoyant l'agencement du dispositif électronique (3) à proximité immédiate de la montre (2) de manière à ce qu'un module de capture (15) du dispositif électronique (3) est disposé en regard de cette représentation graphique (8) située dans le guichet (5) du cadran (4).

3. Procédé selon l'une quelconque des revendications précédentes, **caractérisé en ce que** l'étape d'émission (24) comprend une sous-étape de décodage (25) d'un code matriciel compris dans la représentation graphique (8) en vue d'obtenir des séquences d'informations binaires comportant des données relatives à un emplacement d'un fichier numérique (7) comprenant ledit message (16).

4. Procédé selon l'une quelconque des revendications précédentes, **caractérisé en ce que** l'étape d'émission (24) comprend une sous-étape de génération (26) par le dispositif électronique (3) d'une requête d'obtention d'un fichier numérique (7) comprenant des données de message à partir de séquences d'informations binaires comprenant des données relatives à un emplacement dudit fichier numérique (7).

5. Procédé selon l'une quelconque des revendications précédentes, **caractérisé en ce que** l'étape d'émission (24) comprend une sous-étape de transmission (27) par le serveur (6) du tiers de confiance au dispositif électronique (3) d'un fichier numérique (7) comprenant des données de message.

6. Procédé selon l'une quelconque des revendications 3 à 5, **caractérisé en ce que** l'étape d'émission (24) comprend une sous-étape de traitement (28) des données de message comprenant une phase de génération (29) d'un signal de diffusion du message (16).

7. Procédé selon la revendication précédente, **caractérisé en ce que** la sous-étape de traitement (28) comprend une phase de transmission (30) de ce signal de diffusion à l'interface de diffusion du dispositif électronique (3).

8. Système (1) de diffusion d'un message (16) à un porteur d'une montre (2) comprenant ladite montre (2) et des éléments aptes à communiquer entre eux tels qu'un dispositif électronique (3) et un serveur (6) d'un tiers de confiance (4) fournisseur de messages (16), ladite montre (2) comprenant un cadran (4) pourvu d'un guichet (5) dans lequel est affichée une représentation graphique (6) relative audit message (16) susceptible d'être diffusé par le dispositif électronique (3).

9. Programme d'ordinateur comprenant des instructions de code de programme pour l'exécution des étapes du procédé selon l'une quelconque des revendications 1 à 7, lorsque ledit programme d'ordinateur est exécuté par les unités de traitement (12, 13) du dispositif électronique (3) et d'un serveur (6) d'un tiers de confiance fournisseur de messages (16).

## Patentansprüche

1. Verfahren zur Ausgabe einer Nachricht (16) an einen Träger einer Uhr (2), umfassend:
- einen Anzeigeschritt (20) zum Anzeigen der genannten grafischen Darstellung (8) in dem Fenster (5) des Zifferblatts (4), wobei der Anzeigeschritt (20) einen Auswahlunterschritt (21) der in dem genannten Fenster (5) anzuzeigenden grafischen Darstellung (8) umfasst, der die Betätigung von mindestens einem Bedienelement (10) der genannten Uhr (2) vorsieht; **dadurch gekennzeichnet, dass** das Verfahren die folgenden Schritte umfasst:
- einen Digitalisierungsschritt (22) einer in dem genannten Fenster (5) des Zifferblatts (4) der genannten Uhr (2) angezeigten grafischen Darstellung (8) durch eine elektronische Vorrichtung (3), und
- einen Ausgabeschritt (24) der der genannten digitalisierten grafischen Darstellung (8) zugeordneten Nachricht (16) durch die genannte elektronische Vorrichtung (3).

2. Verfahren nach Anspruch 1,
**dadurch gekennzeichnet, dass** der Digitalisierungsschritt (22) einen Erfassungsunterschritt (23) der grafischen Darstellung (8) umfasst, der die Anordnung der elektronischen Vorrichtung (3) in unmittelbarer Nähe der Uhr (2) vorsieht, so dass ein Erfassungsmodul (15) der elektronischen Vorrichtung (3) der im Fenster (5) des Zifferblatts (4) angeordneten grafischen Darstellung (8) gegenüberliegt.

3. Verfahren nach einem der vorstehenden Ansprüche, **dadurch gekennzeichnet, dass** der Ausgabeschritt (24) einen Dekodierungsunterschritt (25) eines in der grafischen Darstellung (8) enthaltenen Matrixcodes umfasst, um binäre Informationssequenzen zu erhalten, die Daten über einen Speicherort einer digitalen Datei (7) enthalten, die die genannte Nachricht (16) umfasst.

4. Verfahren nach einem der vorstehenden Ansprüche, **dadurch gekennzeichnet, dass** der Ausgabeschritt (24) einen Generierungsunterschritt (26) umfasst, in dem die elektronische Vorrichtung (3) auf der Grundlage binärer Informationssequenzen, die Daten über einen Speicherort der genannten digitalen Datei (7) enthalten, eine Abrufanforderung für eine digitale Datei (7), die Nachrichtendaten umfasst, generiert.

5. Verfahren nach einem der vorstehenden Ansprüche, **dadurch gekennzeichnet, dass** der Ausgabeschritt (24) einen Übertragungsunterschritt (27) umfasst, bei dem der Server (6) des vertrauenswürdigen Dritten eine digitale Datei (7), die Nachrichtendaten umfasst, an die elektronische Vorrichtung (3) überträgt.

6. Verfahren nach einem der Ansprüche 3 bis 5, **dadurch gekennzeichnet, dass** der Ausgabeschritt (24) einen Verarbeitungsunterschritt (28) der Nachrichtendaten umfasst, der eine Generierungsphase (29) eines Ausgangssignals für die Nachricht (16) umfasst.

7. Verfahren nach dem vorhergehenden Anspruch, **dadurch gekennzeichnet, dass** der Verarbeitungsunterschritt (28) eine Übertragungsphase (30) dieses Ausgabesignals an die Ausgabeschnittstelle der elektronischen Vorrichtung (3) umfasst.

8. System (1) zur Ausgabe einer Nachricht (16) an einen Träger einer Uhr (2), umfassend die genannte Uhr (2) und Elemente, die geeignet sind, miteinander zu kommunizieren, wie eine elektronische Vorrichtung (3) und einen Server (6) eines vertrauenswürdigen Dritten (4), der Nachrichten (16) bereitstellt, wobei die genannte Uhr (2) ein Zifferblatt (4) mit einem Fenster (5) umfasst, in dem eine auf die genannte Nachricht (16) bezogene grafische Darstellung (6) angezeigt ist, wobei die genannte Nachricht (16) durch die elektronische Vorrichtung (3) ausgegeben werden kann.

9. Computerprogramm mit Programmcodeanweisungen zur Ausführung der Schritte des Verfahrens nach einem der Ansprüche 1 bis 7, wenn das genannte Computerprogramm von den Verarbeitungseinheiten (12, 13) der elektronischen Vorrichtung (3) und eines Servers (6) eines vertrauenswürdigen Dritten, der Nachrichten (16) bereitstellt, ausgeführt wird.

## Claims

1. Method for broadcasting a message (16) to a wearer of a watch (2) comprising:
- a step (20) of displaying said graphical representation (8) in the aperture (5) of the dial (4), the display step (20) comprises a sub-step (21) of selecting the graphical representation (8) to be displayed in said aperture (5) involving the actuation of at least one control member (10) of said watch (2), **characterised in that** the method comprises the following steps:
- a step (22) of digitising, by way of an electronic device (3), a graphical representation (8) displayed in said aperture (5) of the dial (4) of said watch (2), and
- and a step (24) of transmitting, by way of said electronic device (3), the message (16) associated with said digitised graphical representation (8).

2. Method according claim 1, **characterised in that** the digitisation step (22) comprises a sub-step (23) of acquiring the graphical representation (8) involving the arrangement of the electronic device (3) in the immediate vicinity of the watch (2) such that an acquisition module (15) of the electronic device (3) is disposed facing this graphical representation (8) situated in the aperture (5) of the dial (4).

3. Method according to any of the preceding claims, **characterised in that** the transmission step (24) comprises a sub-step (25) of decoding a matrix code comprised in the graphical representation (8) in order to obtain binary information sequences including data regarding a location of a digital file (7) comprising said message (16).

4. Method according to any of the preceding claims, **characterised in that** the transmission step (24) comprises a sub-step (26) of generating, by way of the electronic device (3), a request to obtain a digital file (7) comprising message data from binary information sequences comprising data regarding a location of said digital file (7).

5. Method according to any of the preceding claims, **characterised in that** the transmission step (24) comprises a sub-step (27) of transmitting, by way of the server (6) of the trusted third party, a digital file (7) comprising message data to the electronic device (3).

6. Method according to any of claims 3 to 5, **characterised in that** the transmission step (24) comprises a sub-step (28) of processing message data comprising a phase (29) of generating a broadcast signal for the message (16).

7. Method according to the preceding claim, **characterised in that** the processing sub-step (28) comprises a phase (30) of transmitting this broadcast signal to the broadcast interface of the electronic device (3).

8. System (1) for broadcasting a message (16) to a wearer of a watch (2) comprising said watch (2) and elements capable of communicating with one another such as an electronic device (3) and a server (6) of a trusted third-party provider of messages (16), said watch (2) comprising a dial (4) provided with an aperture (5) in which is displayed a graphical representation (8) relative to said message (16) capable of being broadcast by the electronic device (3).

9. Computer program product comprising program code instructions for executing the steps of the method according to any of claims 1 to 7, when said computer program is executed by the processing units (12, 13) of the electronic device (3) and of a server (6) of a trusted third-party provider of messages (16).
